# FASCICULE DE BREVET EUROPEEN

(11) **EP 2 627 739 B1**
(45) Date de publication et mention de la délivrance du brevet: **24.01.2018**
(21) Numéro de dépôt: 11779796.9
(22) Date de dépôt: 05.10.2011
(51) Int. Cl.: C10J 3/60, C10J 3/20, C10J 3/64, C10J 3/74, C10J 3/84, C10B 51/00, C10B 53/02, F23G 5/027, F23G 5/24, F23G 7/10

(54) **DISPOSITIF POUR LA TRANSFORMATION D'UN COMBUSTIBLE**
VORRICHTUNG ZUR UMWANDLUNG EINES BRENNSTOFFES
DEVICE FOR THE CONVERSION OF A FUEL

(30) Priorité: 12.10.2010 FR 1058252
(43) Date de publication de la demande: 21.08.2013
(73) Titulaire: S3D, 44307 Nantes Cedex 3 (FR)
(72) Inventeur: CHEN, Li, F-44300 Nantes (FR); KERIHUEL, Anthony, F-44390 Nort Sur Erdre (FR); GERUN, Luc, F-90100 Thiancourt (FR)
(74) Mandataire: Godineau, Valérie
(86) Numéro de dépôt international: PCT/FR2011/052318
(87) Numéro de publication internationale: WO 2012/049400

(56) Documents cités:
- WO-A1-02/40618
- WO-A1-2007/124570
- WO-A1-2008/059109
- WO-A1-2008/145814
- US-A- 4 740 216
- US-A1- 2009 282 738
- US-B1- 6 350 288

## Description

La présente invention concerne de manière générale la gazéification de combustibles comprenant des composants solides.

L'invention concerne plus particulièrement un dispositif pour la transformation d'un combustible comprenant des composants solides, dit combustible solide, en un combustible gazeux, ledit dispositif comportant :
- une zone de pyrolyse du combustible solide comprenant des moyens de pyrolyse permettant de décomposer ledit combustible solide en un gaz de pyrolyse et en un résidu de pyrolyse solide, appelé coke,
- une zone de combustion dudit gaz de pyrolyse, distincte de la zone de pyrolyse, comprenant des moyens de combustion.

Ledit combustible gazeux obtenu à l'aide d'un tel dispositif est un gaz énergétique, généralement appelé syngaz, qui peut être utilisé pour faire fonctionner des équipements adaptés tels que des moteurs, des turbines ou encore des piles à combustible. Cependant, le syngaz contient souvent des goudrons et les équipements adaptés pour être alimentés en syngaz, présentent un faible seuil de tolérance aux goudrons. La condensation des goudrons dans ces équipements entraine, au-delà du seuil de tolérance correspondant, une détérioration rapide dudit équipement.

Il existe des unités de traitement de gaz spécifiques qui permettent de réduire la quantité de goudrons restante dans le syngaz. Mais ces unités de traitement sont volumineuses et onéreuses.

On connaît également de l'état de la technique des dispositifs dits à gazéification étagée qui comprennent une zone de pyrolyse et une zone de combustion distincte. Le gazogène du producteur danois TK Energi AS en est un exemple. Un tel dispositif permet de réduire le taux de goudrons du syngaz obtenu du fait de la séparation des étapes de pyrolyse et de combustion partielle.

Cependant, dans un tel dispositif connu de l'état de la technique, une partie du combustible solide est brûlée pour fournir la chaleur nécessaire à la pyrolyse. Cette combustion directe du solide entraîne une perte de rendement énergétique du dispositif, ainsi que l'émission de gaz polluants, tels que des dioxines.

En outre, lesdites zones de pyrolyse et de combustion sont agencées en étant positionnées bout à bout, de telle sorte que le coke issu de la pyrolyse du combustible traverse la zone de combustion pour former un lit de réduction dans la zone de réduction, ce qui génère un encombrement important du dispositif et augmente le risque d'émissions polluantes. Enfin, l'agencement des zones de pyrolyse et de combustion dans de tels dispositifs entraine des pertes d'énergie importantes au niveau de la zone de combustion qui ne profitent pas à la zone de pyrolyse.

On connait également du document US2009/282738, un dispositif de transformation d'un combustible solide en un combustible gazeux qui comprend une zone de pyrolyse et une zone de combustion munie de moyens de combustion.

Mais, dans le dispositif du document US2009/282738, le combustible solide est brûlé dans la zone de combustion et les gaz de combustion circulent ensuite dans la zone de pyrolyse.

Le dispositif de ce document US2009/282738 génère ainsi le même problème que celui proposé par le producteur danois TK Energi AS qui brûle du carburant solide pour fournir l'apport d'énergie. Une telle combustion du combustible solide génère des émissions polluantes et une perte de rendement énergétique.

En outre, la solution de ce document US2009/282738 ne vise pas à obtenir un gaz énergétique, mais une huile de pyrolyse. Il est alors nécessaire de brûler du combustible solide dans la zone de combustion tout au long du fonctionnement du dispositif pour avoir un apport de chaleur afin de réaliser la réaction de pyrolyse.

Le document WO0240618A1 décrit un dispositif comprenant une zone de pyrolyse centrale entourée d'une zone de combustion. Une telle configuration permet de transmettre une partie de la chaleur issue de la combustion à la zone de pyrolyse, mais on constate d'importantes pertes de chaleur de la zone de combustion vers l'extérieur du dispositif. Ainsi, la récupération de la chaleur par la zone de pyrolyse n'est pas optimisée.

Le document US4740216 décrit un dispositif de gazéification de déchet comprenant une chambre de pyrolyse communiquant par le bas avec une chambre de combustion destinée à mettre en oeuvre la combustion de matières soumises à pyrolyse dans la chambre de pyrolyse. La combustion est entretenue par un flux d'air sous pression qui entraîne avec lui dans la chambre de combustion, par aspiration par le bas, les matières pyrolysées de la chambre de pyrolyse.

La présente invention a pour but de proposer un dispositif de transformation d'un combustible solide en un combustible gazeux qui permet de limiter les pertes thermiques de la zone de combustion vers l'extérieur du dispositif et d'améliorer la récupération de chaleur par la zone de pyrolyse.

Un autre but de la présente invention est de proposer un dispositif de transformation d'un combustible solide en un combustible gazeux, appelé syngaz, dont la quantité d'impuretés, notamment de goudrons, est réduite.

Un autre but de la présente invention est de proposer un dispositif de transformation d'un combustible solide en un combustible gazeux, appelé syngaz, grâce auquel l'émission de polluants, tels que des dioxines et des métaux, est réduite.

A cet effet, l'invention a pour objet un dispositif selon la revendication 1 pour la transformation d'un combustible comprenant des composants solides, dit combustible solide, en un combustible gazeux.

Grâce à la conception du dispositif selon l'invention selon laquelle la zone de pyrolyse entoure la zone de combustion, les pertes thermiques de la zone de combustion vers l'extérieur du dispositif sont réduites tandis que la récupération de la chaleur par la zone de pyrolyse est favorisée, du fait du transfert de chaleur depuis la zone de combustion vers la zone de pyrolyse qui ceinture la zone de combustion.

Comme la zone de combustion est séparée de la zone de pyrolyse, le combustible solide n'est pas en contact avec le comburant, tel que de l'air, injecté dans la zone de combustion, ce qui permet de limiter l'émission de polluants.

En effet, grâce à la pyrolyse du bois, de préférence à une température autour de 500°C, les métaux et le chlore restent dans le coke issu de la pyrolyse du bois, tandis que le gaz de pyrolyse est dépourvu d'éléments polluants. En outre, la combustion du gaz de pyrolyse, en l'absence de combustible solide dans la zone de combustion, permet de craquer un maximum de goudrons.

Le passage de communication entre la zone de pyrolyse et la zone de combustion est réalisé en partie supérieure de la zone de pyrolyse et de la zone de combustion. Ainsi, le gaz de pyrolyse peut passer de la zone de pyrolyse vers la zone de combustion, tandis que les partie solides ne passent pas dans la zone de combustion et restent dans ladite zone de pyrolyse avant de passer, comme détaillé ci-après, dans la zone de réduction lorsque leur taille devient suffisamment petite du fait de la pyrolyse.

Une telle configuration de la zone de combustion autour de la zone de pyrolyse permet de réduire l'encombrement du dispositif et de bénéficier du transfert de chaleur issu de la combustion depuis la zone de combustion vers la zone de pyrolyse par conduction à travers la ou les paroi(s) de séparation des deux zones entre elles comme détaillé ci-après.

En outre, la zone du dispositif qui se trouve à très haute température est confinée dans la zone de combustion, par exemple au niveau du brûleur, ce qui réduit la quantité de matériaux résistants aux hautes températures à utiliser pour la conception du dispositif. Cela permet également de réduire les pertes thermiques et donc de maximiser le rendement total du procédé de transformation.

Selon une caractéristique avantageuse de l'invention, ladite zone de combustion est logée de manière coaxiale dans ladite zone de pyrolyse.

Lesdites zones de pyrolyse et de combustion sont délimitées entre deux parois cylindriques de sections circulaires et coaxiales de sorte que la zone de combustion forme une zone circulaire centrée dans ledit espace annulaire qui délimite la zone de pyrolyse.

Selon une caractéristique avantageuse de l'invention, ledit dispositif comprend une zone de réduction qui présente un passage de communication avec la zone de pyrolyse pour la collecte du coke, issu de la pyrolyse du combustible solide, un emplacement de réception dudit coke et un passage de communication avec la zone de combustion pour l'arrivée dans ladite zone de réduction du gaz issu de la combustion du gaz de pyrolyse afin d'enrichir au moins en hydrogène ledit gaz issu de la combustion du gaz de pyrolyse.

Avantageusement, lesdits moyens de mise en circulation de gaz sont également configurés pour assurer la circulation du gaz issu de la combustion du gaz de pyrolyse depuis ladite zone de combustion jusqu'à la zone de réduction.

Grâce à une telle configuration du dispositif, les différentes étapes de la gazéification, à savoir la pyrolyse, la combustion et la réduction, sont séparées physiquement, ce qui permet d'optimiser chacune de ces étapes de transformation.

Préférentiellement, ledit passage de communication comprend une pente descendante depuis la zone de pyrolyse jusqu'à la zone de réduction pour permettre la collecte par gravité du coke dans son emplacement de réception.

Avantageusement, la pente forme le fond de la zone de pyrolyse et s'étend autour de la zone de combustion pour former un cône de guidage du coke vers la zone de réduction. Ladite zone de pyrolyse étant de forme annulaire et délimitée entre une paroi périphérique externe et une paroi périphérique interne, ladite pente délimite avec la paroi périphérique interne, une sortie, pour le résidu solide issu de la pyrolyse du combustible solide, de hauteur inférieure à la distance d'écartement desdites parois périphériques entre elles.

Ladite zone de pyrolyse de forme annulaire présente, en section transversale, un pourtour interne et un pourtour externe qui sont, de préférence, de géométrie circulaire, mais on peut envisager que lesdits pourtours interne et externe de la zone de pyrolyse annulaire présentent une autre géométrie.

Avantageusement, ledit dispositif comprend des moyens de filtration du gaz issu de la réduction du coke configurés pour filtrer ledit gaz et réinjecter les particules solides, telles que poussières, cendres, contenues dans ledit gaz, à l'intérieur de la zone de réduction.

Selon une caractéristique avantageuse de l'invention, lesdits moyens de combustion comprennent une arrivée de comburant, de préférence de l'air, et des moyens d'amorçage de la réaction entre le comburant et le gaz de pyrolyse.

Selon un mode de réalisation de l'invention, ladite zone de combustion et ladite zone de pyrolyse comprennent une paroi de séparation commune. Avantageusement, ladite zone de réduction est située au moins partiellement sous ladite zone de combustion et/ou sous ladite zone de pyrolyse.

Selon une caractéristique avantageuse de l'invention, ladite zone de réduction est située au moins partiellement entre ladite zone de combustion et ladite zone de pyrolyse en entourant la zone de combustion.

Autrement dit, la zone de réduction sépare ladite zone de combustion de ladite zone de pyrolyse. En particulier, la zone de combustion est entourée par la zone de réduction qui est elle-même entourée par la zone de pyrolyse de sorte que la zone de réduction est délimitée entre une paroi qui délimite le pourtour périphérique interne de la zone de pyrolyse et une paroi périphérique qui délimite la zone de combustion.

Préférentiellement, ledit dispositif comprend une zone de circulation du gaz issu de la réduction du coke, configurée pour permettre audit gaz de circuler autour de la zone de pyrolyse pour transmettre au moins une partie de sa chaleur à la zone de pyrolyse par conduction avec une paroi, de préférence la paroi périphérique externe, de ladite zone de pyrolyse.

Ainsi, la zone de pyrolyse est chauffée à la fois par la zone de combustion et par le gaz circulant dans la zone de circulation qui entoure la zone de pyrolyse afin de favoriser la récupération d'énergie par la zone de pyrolyse.

Avantageusement, ledit dispositif comprend des moyens de séchage du combustible solide communiquant avec l'entrée de la zone de pyrolyse pour le séchage du combustible solide préalablement à son introduction dans ladite zone de pyrolyse.

Selon une caractéristique avantageuse de l'invention, ledit dispositif comprend des moyens d'injection de vapeur d'eau dans la zone de réduction, de préférence de la vapeur d'eau issue des moyens de séchage lorsqu'ils sont présents.

Préférentiellement, le dispositif présentant une paroi externe, au moins une partie de la paroi externe du dispositif comprend des moyens d'isolation thermique.

L'invention concerne également un procédé de transformation d'un combustible comprenant des composants solides, dit combustible solide, en un combustible gazeux, à l'aide d'un dispositif tel que décrit ci-dessus, caractérisé en ce qu'il comprend les étapes suivantes :
a) pyrolyse du combustible solide dans la zone de pyrolyse pour décomposer ledit combustible solide en un gaz de pyrolyse et en un résidu de pyrolyse solide, appelé coke,
b) combustion, de préférence partielle, dudit gaz de pyrolyse dans ladite zone de combustion, en l'absence dudit combustible solide dans ladite zone de combustion. Selon une caractéristique avantageuse de l'invention, pour l'amorçage de ladite transformation, la zone de combustion est préchauffée, de préférence à l'aide d'un brûleur, et, une fois ladite transformation amorcée, le préchauffage est réduit, et de préférence arrêté.

Selon une caractéristique avantageuse de l'invention, ledit procédé comprend également l'étape supplémentaire suivante :
c) réduction du gaz issu de la combustion partielle du gaz de pyrolyse, de préférence pour enrichir en dihydrogène ledit gaz.

Avantageusement, ladite réduction du gaz issu de la combustion partielle du gaz de pyrolyse est réalisée par réaction entre ledit gaz et le coke issu de la pyrolyse du combustible solide.

Préférentiellement, le gaz issu de la réduction circule autour de la zone de pyrolyse pour transmettre au moins une partie de sa chaleur à la zone de pyrolyse.

Avantageusement, ledit combustible solide est amené, de préférence après séchage, dans la zone de pyrolyse et est absent de la zone de combustion.

L'invention sera bien comprise à la lecture de la description suivante d'exemples de réalisation, en référence aux dessins annexés dans lesquels :
- la figure 1 est une vue d'un dispositif de transformation selon l'invention, conformément à un premier mode de réalisation ;
- la figure 2 est une vue d'un dispositif de transformation selon l'invention, conformément à un deuxième mode de réalisation ;
- la figure 3 est une vue d'un dispositif de transformation selon l'invention, conformément à un troisième mode de réalisation.

En référence aux figures et comme rappelé ci-dessus, l'invention concerne un dispositif pour la transformation d'un combustible comprenant des composants solides, dit combustible solide, en un combustible gazeux, appelé syngaz. Un tel dispositif est également appelé gazogène.

La gazéification est une technologie de conversion thermochimique du combustible solide en un gaz combustible, ledit syngaz, composé notamment de H2 et de CO.

Il doit être noté que le terme "solide" utilisé englobe les solides en tant que tels, par exemple des morceaux de bois, mais également des granulés, ou de fins éléments, tels que des sciures de bois.

Différentes gammes de matières organiques solides peuvent être utilisées pour former le combustible solide à transformer en combustible gazeux. Dans l'exemple détaillé ci-dessous, le combustible solide utilisé est du bois.

Le dispositif comprend une zone de pyrolyse 2 du combustible solide comprenant des moyens de pyrolyse permettant de décomposer ledit combustible solide en un gaz de pyrolyse et en un résidu de pyrolyse solide, appelé coke.

Le dispositif comprend également une zone de combustion 3 dudit gaz de pyrolyse, distincte de la zone de pyrolyse 2, comprenant des moyens de combustion 31, 32, 33 permettant de réaliser une combustion partielle du gaz de pyrolyse pour oxyder les goudrons et les autres hydrocarbures contenus dans ledit gaz de pyrolyse.

Le dispositif présente un chemin 23 de passage du gaz de pyrolyse vers la zone de combustion 3. Lesdits moyens de pyrolyse sont formés par la ou les parois qui délimitent la zone de pyrolyse et qui permettent de transmettre à l'intérieur de la zone de pyrolyse de la chaleur, sans apport d'oxygène particulier. Comme détaillé ci-après, cette source de chaleur vient principalement de manière directe ou indirecte de la chaleur dégagée par la zone de combustion.

De manière caractéristique à l'invention, ladite zone de combustion 3 est entourée par ladite zone de pyrolyse 2. Ladite zone de pyrolyse 2 s'étend autour de zone de combustion 3 sur au moins 180°. De préférence, ladite zone de pyrolyse 2 s'étend autour de zone de combustion 3 sur 360° de manière à l'entourer entièrement à la manière d'une ceinture.

Ladite zone de pyrolyse comprend une entrée d'alimentation 21 en combustible solide configurée de telle sorte que le combustible solide est amené dans la zone de pyrolyse par un dôme en V renversé 230 qui s'étend en partie au-dessus de la zone de pyrolyse 2 et en partie au-dessus de la zone de combustion 3, sans rentrer dans la zone de combustion.

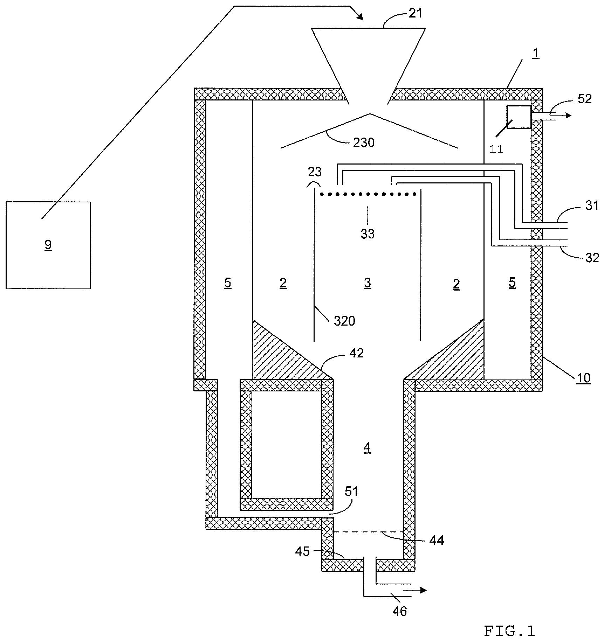

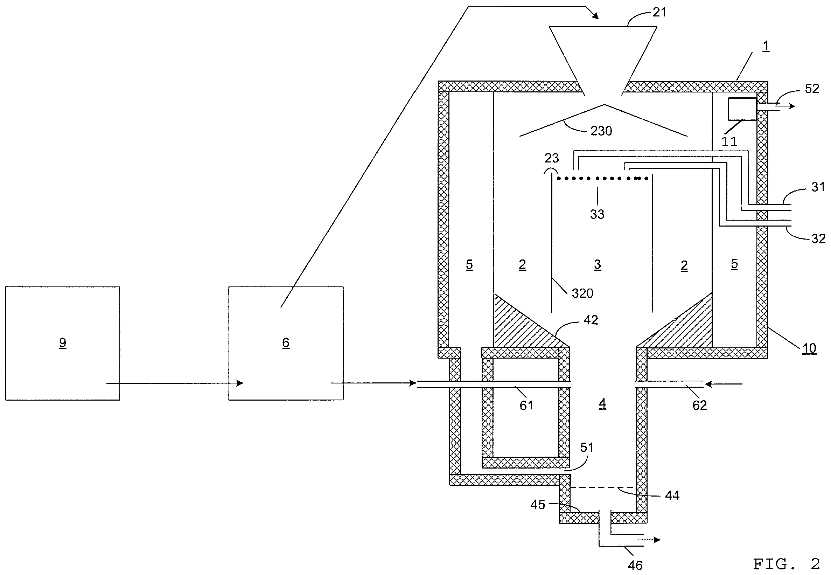

Dans l'exemple illustré aux figures 1 et 2, ledit chemin de passage 23 du gaz de pyrolyse vers la zone de combustion 3 est formé par l'ouverture en partie supérieure de la zone de combustion 3 qui communique avec la partie supérieure de la zone de pyrolyse 2, et un moyen de guidage, formé par le dôme en V renversé 230 pour guider le gaz de pyrolyse depuis la partie supérieure de la zone de pyrolyse 2 vers la zone de combustion 3.

En particulier, ledit dispositif est muni de moyens de mise en circulation de gaz 11 pour faire circuler le gaz de pyrolyse, depuis ladite zone de pyrolyse 2 jusqu'à la zone de combustion 3. De manière plus générale, lesdits moyens de mise en circulation de gaz sont configurés pour faire circuler le gaz présent dans le dispositif depuis la zone de pyrolyse 2 jusqu'à la sortie 52 dudit dispositif.

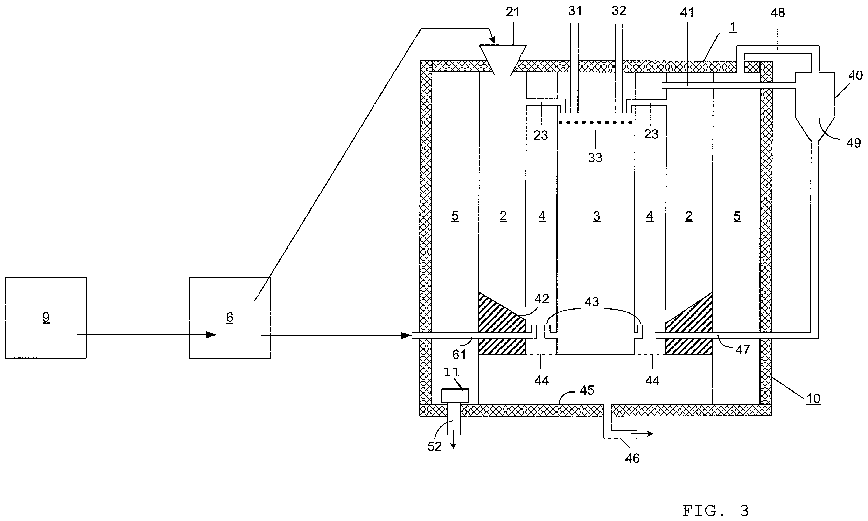

Dans l'exemple illustré à la figure 3 pour lequel la zone de pyrolyse est séparée de la zone de combustion par la zone de réduction 4 comme détaillé ci-après, un ou plusieurs conduits 23 assurent le passage du gaz de pyrolyse depuis la zone de pyrolyse 2 vers la zone de combustion 3.

Lesdits moyens de combustion 31, 32, 33 de la zone de combustion 3 comprennent une arrivée 31 de comburant, de préférence de l'air, et des moyens d'amorçage 32, 33 de la réaction entre le comburant et le gaz de pyrolyse. Lesdits moyens d'amorçage sont formés par un brûleur 33 et une arrivée de combustible 32, de préférence du propane, autre que le gaz de pyrolyse, pour former avec le comburant amené par l'arrivée 31 une flamme d'air à haute température, de préférence au moins 1000°C, afin de fournir la chaleur nécessaire pour la pyrolyse et amorcer la combustion partielle du gaz de pyrolyse. Après amorçage de la combustion partielle du gaz de pyrolyse, c'est-à-dire pendant le fonctionnement normal du gazogène, le débit d'arrivée de combustible 32 peut être réduit voire annulé.

Comme détaillé ci-après et illustré aux figures 2 et 3, le dispositif peut être équipé de moyens de séchage 6 du combustible solide pour obtenir un combustible solide sec et de l'eau à l'état vapeur.

La pyrolyse permet la transformation, à l'abri de l'oxygène de la zone de combustion, du combustible solide en un gaz dit gaz de pyrolyse et en un résidu solide appelé coke. Le gaz de pyrolyse comprend des goudrons qui sont un mélange d'hydrocarbures ayant une température de condensation élevée, supérieure à celle du benzène. Comme détaillé ci-après, les goudrons sont produits lors de la pyrolyse puis oxydés et craqués thermiquement pendant la phase de combustion partielle dans la zone de combustion, et enfin craqués catalytiquement dans la zone de réduction avec le coke.

La zone de combustion 3 permet d'oxyder partiellement le gaz de pyrolyse (goudrons et autres hydrocarbures) pour produire des molécules de CO2 et de H2O. La chaleur dégagée par l'oxydation partielle du gaz de pyrolyse dans la zone de combustion 3 est transférée de manière directe ou indirecte au combustible solide présent dans la zone de pyrolyse 2 et au coke présent dans la zone de réduction 4.

Les moyens de combustion du gaz de pyrolyse forment ainsi au moins une partie desdits moyens de pyrolyse. Autrement dit, la chaleur issue de la combustion partielle du gaz de pyrolyse est récupérée au moins en partie par la zone de pyrolyse 2 de sorte que la réaction de pyrolyse est auto-entretenue une fois amorcée la combustion partielle du gaz de pyrolyse.

Le combustible solide n'est pas en contact directement avec le comburant injecté dans la zone de combustion 3, ce qui diminue l'émission des polluants éventuels, tels que des dioxines et des métaux.

En particulier, chacune des zones de combustion et de pyrolyse est cylindrique, de section circulaire pour la zone de combustion 3 et de section annulaire pour la zone de pyrolyse 2. Ladite zone de combustion 3 est logée de manière coaxiale dans ladite zone de pyrolyse 2.

Dans l'exemple illustré aux figures 1 et 2, l'oxydation partielle du gaz de pyrolyse dégage de la chaleur qui est transférée par la paroi périphérique 320 de séparation de la zone de pyrolyse 2 et de la zone de combustion 3, au combustible solide présent dans la zone de pyrolyse 2. En particulier, dans l'exemple illustré aux figures 1 et 2, la paroi périphérique 320 sépare les deux zones de pyrolyse 2 et de combustion 3 en définissant le pourtour intérieur de la zone de pyrolyse 2 de forme annulaire et le pourtour extérieur de la zone de combustion 3 de forme circulaire.

Ledit dispositif comprend également une zone de réduction 4 qui présente un passage de communication 42 avec la zone de pyrolyse 2 pour la collecte du coke, issu de la pyrolyse du combustible solide, et un emplacement de réception 44 dudit coke pour former un lit de réduction. Ladite zone de réduction comprend également un passage de communication 43 avec la zone de combustion 3 pour l'arrivée dans ladite zone de réduction 4 des produits, notamment CO, CO2, CH4, H2O et H2, issus de la combustion partielle des gaz de pyrolyse afin d'enrichir au moins en H2 le gaz issu de la combustion partielle du gaz de pyrolyse.

A cet effet, lesdits moyens de mise en circulation de gaz 11 sont également configurés pour assurer la circulation du gaz issu de la combustion du gaz de pyrolyse depuis ladite zone de combustion jusqu'à la zone de réduction.

Lesdits moyens de mise en circulation 11 peuvent être formés par une turbine disposée à, ou au voisinage de, la sortie 52 du dispositif pour forcer la circulation de gaz depuis la zone de pyrolyse 2 jusqu'à la sortie 52 du dispositif, en passant par la zone de combustion 3, et les autres zones de traitement, telles que la zone de réduction 4 et de préférence, comme détaillé ci-après, la zone de circulation 5 de gaz qui s'étend autour de la zone de réduction 4.

Le syngaz ainsi obtenu contient également du CO. Le passage de communication 42 est configuré pour ne pas passer par la zone de combustion 3 afin d'éviter la réaction du coke avec le comburant à haute température de la zone de combustion 3.

Ainsi, la pyrolyse avec le dispositif selon l'invention permet le dégagement des goudrons du combustible solide qui passent ensuite par la zone très chaude de combustion puis par le lit de coke. Il en résulte un craquage des goudrons qui permet non seulement d'éliminer le goudron en tant que tel, mais également d'améliorer la composition du gaz final et d'augmenter la quantité de gaz produite

Dans l'exemple illustré aux figures 1 et 2, le lit de réduction formé par le coke présente de préférence une hauteur élevée, non seulement de manière à réagir avec le gaz issu de la zone de combustion, afin de favoriser la production de H2 et de CO, mais aussi pour servir de filtre afin d'éliminer au maximum les goudrons et les particules restant dans ledit gaz pour obtenir un gaz propre.

Dans l'exemple illustré à la figure 3, la chaleur dégagée par la zone de combustion 3 est transmise à la zone de pyrolyse 2 par l'intermédiaire des parois périphériques opposées de la zone de réduction 4 qui sont communes l'une avec la zone de combustion 3 et l'autre avec la zone de pyrolyse 2.

Le passage de communication 43 est situé du côté opposé au passage de communication 23 entre la zone de pyrolyse 2 et la zone de combustion 3 par rapport au centre de la zone de combustion de manière à récupérer le gaz issu de la combustion partielle du gaz de pyrolyse, c'est-à-dire après oxydation des goudrons et des autres hydrocarbures.

Dans l'exemple illustré aux figures 1 et 2, ladite zone de réduction 4 est située en dessous du niveau de ladite zone de combustion 3 et de ladite zone de pyrolyse 2. En outre, ladite zone de réduction 4 est située à l'aplomb de ladite zone de combustion 3 de manière à permettre aux produits CO2 et H2O issus de la combustion partielle du gaz de pyrolyse de réagir avec le lit de coke situé dans ledit emplacement 44.

L'emplacement de réception 44 est de préférence délimité par une grille qui maintient le coke et laisse passer les cendres issues de la réduction du coke, qui sont récupérées dans un cendrier 45 situé sous la grille puis évacuées par une conduite 46.

Avantageusement, le dispositif est équipé de moyens de mise en dépression de la zone de réduction 4 de manière à assurer une circulation du gaz issu de la combustion partielle du gaz de pyrolyse, à travers le lit de coke présent dans la zone de réduction 4.

Ledit passage de communication 42 de la zone de pyrolyse 2 vers la zone de réduction 4 comprend une pente descendante depuis la zone de pyrolyse 2 jusqu'à la zone de réduction 4 pour permettre la collecte par gravité du coke dans son emplacement de réception 44. Ladite pente 42 forme la paroi de fond de la zone de pyrolyse.

Ladite pente 42 délimite en coopération avec la paroi périphérique interne de la zone de pyrolyse une sortie d'évacuation du résidu solide du combustible après pyrolyse, de hauteur inférieure à la distance d'écartement entre les parois périphériques interne et externe de la zone de pyrolyse 2. Ainsi, le combustible solide est évacué de la zone de pyrolyse par la pente 42 vers la zone de réduction 4 seulement après pyrolyse dudit combustible solide, c'est-à-dire sous la forme d'un résidu solide dudit combustible, de dimension inférieure à la dimension du combustible solide non encore pyrolysé.

La pente 42 s'étend autour de l'axe de la zone de pyrolyse 2 (confondu avec l'axe de la zone de combustion 3) et s'étend également de la zone de pyrolyse 2 jusqu'à une zone située entre la zone de combustion 3 et la zone de réduction 4, au droit de la zone de combustion 3, pour former une section de passage de la zone de combustion 3 à la zone de réduction 4 de dimension inférieure à la dimension de la section de la zone de combustion 3.

La pente 42 forme ainsi une restriction de passage, ce qui augmente la turbulence dans les écoulements gazeux entre la zone de combustion 3 et la zone de réduction 4, et favorise le mélange local comburant/ gaz de pyrolyse dans la zone de combustion 3. D'autre part, une telle restriction de passage permet d'améliorer le mélange local comburant / gaz de pyrolyse d'un point de vue macroscopique de manière à limiter le risque de présence de zones relativement froides par où pourraient passer les goudrons sans être craqués.

Ledit dispositif comprend également une zone de circulation 5 du gaz issu de la réduction du coke, configurée pour permettre audit gaz de circuler autour de la zone de pyrolyse 2 pour transmettre au moins une partie de sa chaleur à la zone de pyrolyse 2 par conduction avec la paroi périphérique externe de ladite zone de pyrolyse 2.

Ladite zone de circulation 5 du gaz est délimitée entre la paroi périphérique externe de la zone de pyrolyse 2 et une autre paroi périphérique, par exemple la paroi périphérique externe du dispositif, qui entoure à écartement ladite paroi périphérique externe de la zone de pyrolyse 2.

Ladite zone de circulation 5 comprend un passage de communication 51 avec la zone de réduction 4 et une sortie de gaz 52 permettant au gaz d'être récupéré pour faire fonctionner un équipement adapté.

Dans l'exemple illustré à la figure 3, ledit dispositif comprend des moyens de filtration 40 permettant de filtrer le gaz issu de la réduction du coke et de réinjecter les particules solides contenues dans ledit gaz, dans la zone de réduction 4.

Lesdits moyens de recirculation 40 comprennent une entrée 41 de gaz débouchant dans ladite zone de réduction 4, un cyclone 49, une sortie 47 de réinjection des particules solides, telles que poussières ou cendres, dans ladite zone de réduction 4 et une sortie 48 du gaz filtré communiquant avec la zone de circulation 5 qui s'étend autour de la zone de pyrolyse 2.

Avantageusement, la matière organique utilisée comme combustible solide dans le dispositif selon l'invention présente un taux d'humidité de moins de 50% (base sèche). On peut citer notamment les combustibles suivants :
- le bois et ses dérivés non contaminés, tels que sciures, plaquettes forestières, écorces ;
- les litières de volailles ;
- le bois adjuvanté ;
- les déchets verts ;
- une fraction organique des ordures ménagères ;
- une fraction plastique des ordures ménagères ;
- les plastiques ;
- les pneus.

Comme illustré aux figures 2 et 3, le dispositif selon l'invention peut comprendre des moyens de séchage 6 du combustible solide communiquant avec l'entrée 21 de la zone de pyrolyse 2 pour le séchage du combustible solide préalablement à son introduction dans ladite zone de pyrolyse 2.

Comme illustré aux figures 2 et 3, ledit dispositif peut être muni de moyens d'injection 61 de vapeur d'eau dans la zone de réduction 4, de préférence de la vapeur d'eau issue des moyens de séchage 6. D'autres gaz peuvent également être injectés par une conduite 62 au niveau de la zone de réduction 4.

Le dispositif présentant une paroi externe 10, au moins une partie de la paroi externe du dispositif comprend des moyens d'isolation thermique. En particulier, on peut prévoir que ladite paroi externe du dispositif soit revêtue d'une couche d'isolation thermique.

Le dispositif tel que décrit ci-dessus permet de mettre en oeuvre un procédé de transformation d'un combustible solide en gaz de la manière suivante. Ce procédé est décrit ci-dessous pour un dispositif de transformation correspondant au dispositif illustré à la figure 1.

Le préchauffage du gazogène est réalisé à l'aide du brûleur 33 par alimentation en comburant 31, ici de l'air, et en un combustible 32, de préférence du propane 32, ou par exemple du syngaz ou un autre gaz combustible. Le gazogène peut également être préchauffé par un écoulement de gaz chaud issu de gaz d'échappement ou de toute autre source de chaleur.

Une fois que la température de la zone de pyrolyse du gazogène est supérieure à la température de démarrage, par exemple 500°C, le combustible solide stocké dans la zone de stockage 9 est amené dans la zone de pyrolyse 2. Le bois se décompose afin de produire un gaz de pyrolyse et un résidu carboné formant le coke.

Le gaz de pyrolyse passe ensuite dans la zone de combustion 3 et se brûle partiellement avec l'air 31 injecté. Le débit de propane 32 injecté est diminué progressivement lorsque la production du gaz pyrolyse augmente pour finalement être stoppé en fonctionnement continu. Autrement dit, le propane présente une fonction d'allumage et de préchauffe.

Grâce à la force de gravitation, le coke issu de la pyrolyse glisse le long de la pente 42 et tombe sur la grille 44 pour former un lit de réduction.

Le gaz issu de la combustion partielle du gaz de pyrolyse dans la zone de combustion 3 passe dans la zone de réduction 4 pour réagir avec le coke afin d'enrichir la teneur du gaz produit en H2 et en CO.

On peut prévoir que ledit dispositif comprenne une double-paroi, par exemple la zone 5 illustrée aux figures 1 à 3, chauffée par un moyen externe, tel qu'une autre source de chaleur, la combustion d'une partie du syngaz, des gaz d'échappement de moteur, une turbine ou une chaudière, pour diminuer le temps de démarrage du procédé et améliorer son fonctionnement.

Le préchauffage de l'air 31 injecté dans la zone de combustion 3 peut être effectué en récupérant la chaleur des gaz produits et/ou de la chaleur dégagée par le dispositif et/ou à partir de toute autre source de chaleur.

Le procédé décrit ci-dessus peut fonctionner avec un gaz 31 autre que l'air pour former le comburant injecté dans la zone de combustion 3 : oxygène pur, air enrichi en oxygène.

Préférentiellement, aucun mécanisme, y compris pour le convoyage du combustible, n'est situé dans une zone chaude afin d'éviter des complications techniques.

Grâce à une telle conception du dispositif selon l'invention, le combustible solide n'est jamais brûlé directement, ni mis en contact avec le comburant injecté dans la zone de combustion. Par conséquent, l'essentiel des polluants éventuels (chlore, métaux) reste à l'état solide dans les cendres ou dans le filtre à particules. Les émissions de dioxines et de métaux gazeux sont donc fortement réduites comparativement à un procédé de combustion classique.

Le dispositif selon l'invention forme un gazogène d'utilisation simple et de faible coût. En effet, la transformation du combustible solide en combustible gazeux avec un tel dispositif selon l'invention est simple à mettre en oeuvre, efficace, respectueuse de l'environnement et relativement peu onéreuse pour la valorisation du combustible solide.

En outre, la pyrolyse du combustible solide permet de générer un gaz de pyrolyse dont l'oxydation ne nécessite qu'une faible quantité d'oxygène à injecter, ce qui permet de limiter la production de composés polluants tels que les dioxines. Un tel dispositif permet ainsi de réduire encore les émissions polluantes.

Comme rappelé ci-dessus, le syngaz obtenu par transformation du combustible solide peut être utilisé de manière fiable et efficace dans diverses applications : chaudière, moteur à combustion interne, turbine, pile à combustible, cogénération même à petite échelle, etc...

## Revendications

1. Dispositif pour la transformation d'un combustible comprenant des composants solides, dit combustible solide, en un combustible gazeux,
ledit dispositif comportant une zone de pyrolyse (2) et une zone de combustion (3) munie de moyens de combustion (31, 32, 33), distincte de la zone de pyrolyse (2) et entourée par ladite zone de pyrolyse, un chemin (23) de passage entre la zone de pyrolyse (2) et la zone de combustion (3) et des moyens de mise en circulation de gaz,
**caractérisé en ce que** le dispositif comprend des moyens d'introduction du combustible solide dans ladite zone de pyrolyse, ladite zone de pyrolyse comprenant des moyens de pyrolyse aptes à décomposer ledit combustible solide en un gaz de pyrolyse et en un résidu de pyrolyse solide, appelé coke, **en ce que** la zone de combustion (3) est agencée avec les moyens d'introduction du combustible solide et la zone de pyrolyse de sorte que le combustible solide n'est pas en contact directement avec le comburant destiné à être injecté dans la zone de combustion,
et **en ce que** les moyens de mise en circulation de gaz sont agencés pour faire circuler ledit gaz de pyrolyse par ledit chemin (23) de passage, depuis ladite zone de pyrolyse (2) jusque dans la zone de combustion (3).

2. Dispositif selon la revendication 1, **caractérisé en ce que** ladite zone de combustion (3) est logée de manière coaxiale dans ladite zone de pyrolyse (2).

3. Dispositif selon l'une des revendications précédentes, **caractérisé en ce que** ledit dispositif comprend une zone de réduction (4) qui présente un passage de communication (42) avec la zone de pyrolyse (2) pour la collecte du coke, issu de la pyrolyse du combustible solide, un emplacement de réception (44) dudit coke et un passage de communication (43) avec la zone de combustion (3) pour l'arrivée dans ladite zone de réduction (4) du gaz issu de la combustion du gaz de pyrolyse afin d'enrichir au moins en hydrogène ledit gaz issu de la combustion du gaz de pyrolyse.

4. Dispositif selon la revendication 3, **caractérisé en ce que** ledit passage de communication (42) comprend une pente descendante depuis la zone de pyrolyse (2) jusqu'à la zone de réduction (4) pour permettre la collecte par gravité du coke dans son emplacement de réception (44),
et **en ce que**, ladite zone de pyrolyse (2) étant de forme annulaire et délimitée entre une paroi périphérique externe et une paroi périphérique interne, ladite pente (42) délimite avec ladite paroi périphérique interne, une sortie, pour le résidu solide issu de la pyrolyse du combustible solide, de hauteur inférieure à la distance d'écartement desdites parois périphériques entre elles.

5. Dispositif selon l'une des revendications 3 ou 4, **caractérisé en ce que** ledit dispositif comprend des moyens de filtration (40) du gaz issu de la réduction du coke configurés pour filtrer ledit gaz et réinjecter les particules solides, telles que poussières, cendres, contenues dans ledit gaz, à l'intérieur de la zone de réduction (4).

6. Dispositif selon l'une des revendications 3 à 5, **caractérisé en ce que** ladite zone de réduction (4) est située au moins partiellement sous ladite zone de combustion (3) et/ou sous ladite zone de pyrolyse (2).

7. Dispositif selon l'une des revendications 3 à 6, **caractérisé en ce que** ledit dispositif comprend une zone de circulation (5) du gaz issu de la réduction du coke, configurée pour permettre audit gaz de circuler autour de la zone de pyrolyse (2) pour transmettre au moins une partie de sa chaleur à la zone de pyrolyse (2) par conduction avec une paroi, de préférence la paroi périphérique externe, de ladite zone de pyrolyse (2).

8. Dispositif selon l'une des revendications 3 à 7, **caractérisé en ce que** ledit dispositif comprend des moyens d'injection (61) de vapeur d'eau dans la zone de réduction (4).

9. Dispositif selon l'une des revendications 3 à 8, **caractérisé en ce que** ladite zone de réduction (4) est située au moins partiellement entre ladite zone de combustion (3) et ladite zone de pyrolyse (2) en entourant la zone de combustion (3).

10. Dispositif selon l'une des revendications 1 à 8, **caractérisé en ce que** ladite zone de combustion (3) et ladite zone de pyrolyse (2) comprennent une paroi de séparation commune (320).

11. Dispositif selon l'une des revendications précédentes, **caractérisé en ce que** lesdits moyens de combustion (31, 32, 33) comprennent une arrivée (31) de comburant, de préférence de l'air, et des moyens d'amorçage (32, 33) de la réaction entre le comburant et le gaz de pyrolyse.

12. Dispositif selon l'une des revendications précédentes, **caractérisé en ce que** ledit dispositif comprend des moyens de séchage (6) du combustible solide communiquant avec l'entrée (21) de la zone de pyrolyse (2) pour le séchage du combustible solide préalablement à son introduction dans ladite zone de pyrolyse (2).

13. Dispositif selon l'une des revendications précédentes, **caractérisé en ce que**, le dispositif présentant une paroi externe, au moins une partie de la paroi externe du dispositif comprend des moyens d'isolation thermique.

14. Procédé de transformation d'un combustible comprenant des composants solides, dit combustible solide, en un combustible gazeux, à l'aide d'un dispositif conforme à l'une de revendications précédentes,
**caractérisé en ce qu'**il comprend les étapes suivantes :
a) pyrolyse du combustible solide dans la zone de pyrolyse pour décomposer ledit combustible solide en un gaz de pyrolyse et en un résidu de pyrolyse solide, appelé coke,
b) combustion, de préférence partielle, dudit gaz de pyrolyse dans ladite zone de combustion, en l'absence dudit combustible solide dans ladite zone de combustion.

15. Procédé selon la revendication 14, **caractérisé en ce que** pour l'amorçage de ladite transformation, la zone de combustion (3) est préchauffée, de préférence à l'aide d'un brûleur (33), et **en ce que**, une fois ladite transformation amorcée, le préchauffage est réduit, et de préférence arrêté.

16. Procédé selon la revendication 14 ou 15, **caractérisé en ce que** ledit procédé comprend également l'étape supplémentaire suivante :
c) réduction du gaz issu de la combustion partielle du gaz de pyrolyse, de préférence pour enrichir en dihydrogène ledit gaz.

17. Procédé selon la revendication 16, **caractérisé en ce que** ladite réduction du gaz issu de la combustion partielle du gaz de pyrolyse est réalisée par réaction entre ledit gaz et le coke issu de la pyrolyse du combustible solide.

18. Procédé selon la revendication 17 ou 16, **caractérisé en ce que** le gaz issu de la réduction circule autour de la zone de pyrolyse (2) pour transmettre au moins une partie de sa chaleur à la zone de pyrolyse (2).

19. Procédé selon l'une des revendications 14 à 18, **caractérisé en ce que** ledit combustible solide est amené, de préférence après séchage, dans la zone de pyrolyse (2) et est absent de la zone de combustion (3).

## Patentansprüche

1. Vorrichtung zur Umwandlung eines Brennstoffs, umfassend feste Bestandteile, als fester Brennstoff bezeichnet, in einen gasförmigen Brennstoff,
wobei die Vorrichtung einen Pyrolysebereich (2) und einen Verbrennungsbereich (3), ausgestattet mit Verbrennungsmittel (31, 32, 33), der sich vom Pyrolysebereich (2) unterscheidet und von dem Pyrolysebereich umgeben ist, einen Durchgangsweg (23) zwischen dem Pyrolysebereich (2) und dem Verbrennungsbereich (3) und Mittel, um das Gas in Zirkulation zu versetzen, aufweist,
**dadurch gekennzeichnet, dass** die Vorrichtung Mittel zum Einleiten des festen Brennstoffs in den Pyrolysebereich umfasst, wobei der Pyrolysebereich Pyrolysemittel umfasst, die imstande sind, den festen Brennstoff in ein Pyrolysegas und in einen festen Pyrolysereststoff, als Koks bezeichnet, zu zerlegen,
und dass der Verbrennungsbereich (3) mit den Mitteln zum Einleiten des festen Brennstoffs und dem Pyrolysebereich derart ausgebildet ist, dass der feste Brennstoff nicht direkt im Kontakt mit dem Sauerstoffträger ist, der bestimmt ist, in den Verbrennungsbereich (3) eingeleitet zu werden,
und dass die Mittel, um das Gas in Zirkulation zu versetzen, ausgebildet sind, damit das Pyrolysegas über den Durchgangsweg (23) vom Pyrolysebereich (2) bis in den Verbrennungsbereich (3) zirkuliert.

2. Vorrichtung nach Anspruch 1, **dadurch gekennzeichnet, dass** der Verbrennungsbereich (3) koaxial im Pyrolysebereich (2) angeordnet ist.

3. Vorrichtung nach einem der vorangehenden Ansprüche, **dadurch gekennzeichnet, dass** die Vorrichtung einen Reduktionsbereich (4) umfasst, der einen Kommunikationsübergang (42) mit dem Pyrolysebereich (2) für das Sammeln des Kokses, hervorgegangen aus der Pyrolyse des festen Brennstoffs, eine Empfangsstelle (44) des Kokses und einen Kommunikationsübergang (43) mit dem Verbrennungsbereich (3) für die Ankunft in dem Reduktionsbereich (4) des Gases, hervorgegangen aus der Verbrennung des Pyrolysegases, um das Gas, hervorgegangen aus der Verbrennung des Pyrolysegases, mindestens mit Wasserstoff anzureichern, aufweist.

4. Vorrichtung nach Anspruch 3, **dadurch gekennzeichnet, dass** der Kommunikationsübergang (42) eine vom Pyrolysebereich (2) bis zum Reduktionsbereich (4) abfallende Neigung umfasst, um das Sammeln durch Schwerkraft des Kokses an seiner Empfangsstelle (44) zu erlauben,
und dass, wobei der Pyrolysebereich (2) ringförmig ist und zwischen einer äußeren Umfangswand und einer inneren Umfangswand begrenzt ist, die Neigung (42) mit der inneren Umfangswand einen Ausgang für den festen Reststoff, hervorgegangen aus der Pyrolyse des festen Brennstoffs, mit einer Höhe, die kleiner als die Beabstandungsdistanz zwischen den Umfangswänden untereinander ist, begrenzt.

5. Vorrichtung nach einem der Ansprüche 3 oder 4, **dadurch gekennzeichnet, dass** die Vorrichtung Filtermittel (40) des Gases, hervorgegangen aus der Reduktion des Kokses, umfasst, die konfiguriert sind, um das Gas zu filtern und die festen Partikel wie Staub, Asche, die in dem Gas enthalten sind, wieder in den Reduktionsbereich (4) einzuleiten.

6. Vorrichtung nach einem der Ansprüche 3 bis 5, **dadurch gekennzeichnet, dass** sich der Reduktionsbereich (4) mindestens teilweise unter dem Verbrennungsbereich (3) und/oder dem Pyrolysebereich (2) befindet.

7. Vorrichtung nach einem der Ansprüche 3 bis 6, **dadurch gekennzeichnet, dass** die Vorrichtung einen Zirkulationsbereich (5) des Gases, hervorgegangen aus der Reduktion des Kokses, umfasst, der konfiguriert ist, um dem Gas zu erlauben, um den Pyrolysebereich (2) zu zirkulieren, um mindestens einen Teil seiner Wärme an den Pyrolysebereich (2) durch Leitung mit einer Wand, vorzugsweise der äußeren Umfangswand, des Pyrolysebereichs (2) zu übertragen.

8. Vorrichtung nach einem der Ansprüche 3 bis 7, **dadurch gekennzeichnet, dass** die Vorrichtung Einleitmittel (61) von Wasserdampf in den Reduktionsbereich (4) umfasst.

9. Vorrichtung nach einem der Ansprüche 3 bis 8, **dadurch gekennzeichnet, dass** sich der Reduktionsbereich (4) mindestens teilweise zwischen dem Verbrennungsbereich (3) und dem Pyrolysebereich (2) befindet und dabei den Verbrennungsbereich (3) umgibt.

10. Vorrichtung nach einem der Ansprüche 1 bis 8, **dadurch gekennzeichnet, dass** der Verbrennungsbereich (3) und der Pyrolysebereich (2) eine gemeinsame Trennwand (320) umfassen.

11. Vorrichtung nach einem der vorangehenden Ansprüche, **dadurch gekennzeichnet, dass** die Verbrennungsmittel (31, 32, 33) eine Ankunft (31) von die Verbrennung förderndem Stoff, vorzugsweise Luft, und Startmittel (32, 33) der Reaktion zwischen dem die Verbrennung fördernden Stoff und dem Pyrolysegas umfassen.

12. Vorrichtung nach einem der vorangehenden Ansprüche, **dadurch gekennzeichnet, dass** die Vorrichtung Trocknungsmittel (6) des festen Brennstoffs, die mit dem Eingang (21) des Pyrolysebereichs (2) kommunizieren, für das Trocknen des festen Brennstoffs vor seiner Einleitung in den Pyrolysebereich (2) umfasst.

13. Vorrichtung nach einem der vorangehenden Ansprüche, **dadurch gekennzeichnet, dass**, wobei die Vorrichtung eine Außenwand aufweist, mindestens ein Teil der Außenwand der Vorrichtung Wärmeisolationsmittel umfasst.

14. Verfahren zur Umwandlung eines Brennstoffs, umfassend feste Bestandteile, als fester Brennstoff bezeichnet, in einen gasförmigen Brennstoff, mit Hilfe einer Vorrichtung nach einem der vorangehenden Ansprüche,
**dadurch gekennzeichnet, dass** es die folgenden Schritte umfasst:
a) Pyrolyse des festen Brennstoffs im Pyrolysebereich, um den festen Brennstoff in ein Pyrolysegas und in einen festen Pyrolysereststoff, als Koks bezeichnet, zu zerlegen,
b) Verbrennen, vorzugsweise teilweise, des Pyrolysegases im Verbrennungsbereich, bei Abwesenheit des festen Brennstoffs im Verbrennungsbereich.

15. Verfahren nach Anspruch 14, **dadurch gekennzeichnet, dass** für das Starten der Umwandlung der Verbrennungsbereich (3) vorgeheizt wird, vorzugsweise mit einem Brenner (33), und dass, sobald die Umwandlung gestartet ist, das Vorheizen reduziert, vorzugsweise eingestellt, wird.

16. Verfahren nach Anspruch 14 oder 15, **dadurch gekennzeichnet, dass** das Verfahren ebenfalls den folgenden zusätzlichen Schritt umfasst:
c) Reduktion des Gases, hervorgegangen aus der Teilverbrennung des Pyrolysegases, vorzugweise zum Anreichern des Gases mit Diwasserstoff.

17. Verfahren nach Anspruch 16, **dadurch gekennzeichnet, dass** die Reduktion des Gases, hervorgegangen aus der Teilverbrennung des Pyrolysegases, durch Reaktion zwischen dem Gas und dem Koks, hervorgegangen aus der Pyrolyse des festen Brennstoffs, erfolgt.

18. Verfahren nach Anspruch 17 oder 16, **dadurch gekennzeichnet, dass** das Gas, hervorgegangen aus der Reduktion, um den Pyrolysebereich (2) zirkuliert, um mindestens einen Teil seiner Wärme an den Pyrolysebereich (2) zu übertragen.

19. Verfahren nach einem der Ansprüche 14 bis 18, **dadurch gekennzeichnet, dass** der feste Brennstoff vorzugsweise nach dem Trocknen in den Pyrolysebereich (2) geführt wird und vom Verbrennungsbereich (3) abwesend ist.

## Claims

1. Device for converting a fuel comprising solid components, called solid fuel, to a gaseous fuel,
said device comprising a pyrolysis zone (2) and a combustion zone (3) provided with combustion means (31, 32, 33), separate from the pyrolysis zone (2) and surrounded by said pyrolysis zone, a passageway (23) between the pyrolysis zone (2) and the combustion zone (3) and means for circulating gas,
**characterized in that** the device comprises means for feeding solid fuel into said pyrolysis zone, said pyrolysis zone comprising pyrolysis means able to decompose said solid fuel to a pyrolysis gas and to a solid pyrolysis residue called coke,
**in that** the combustion zone (3) is arranged with the means for feeding solid fuel and the pyrolysis zone so that the solid fuel is not in direct contact with the oxidizer intended to be injected into the combustion zone,
and **in that** the means for circulating gas are arranged to cause said pyrolysis gas to circulate via said passageway (23) from said pyrolysis zone (2) as far as into the combustion zone (3).

2. The device according to claim 1, **characterized in that** said combustion zone (3) is housed coaxially in said pyrolysis zone (2).

3. The device according to one of the preceding claims, **characterized in that** said device comprises a reduction zone (4) having a communication pathway (42) with the pyrolysis zone (2) to collect the coke derived from pyrolysis of the solid fuel, a receiving area (44) for said coke, and a communication pathway (43) with the combustion zone (3) for inletting the gas derived from combustion of the pyrolysis gas into said reduction zone (4) so as to enrich at least with hydrogen said gas derived from combustion of the pyrolysis gas.

4. The device according to claim 3, **characterized in that** said communication pathway (42) comprises a downward slope from the pyrolysis zone (2) to the reduction zone (4) to allow collection of the coke under gravity in its receiving area (44),
and **in that**, said pyrolysis zone (2) being of annular shape and delimited between an outer peripheral wall and an inner peripheral wall, said slope (42) together with said inner peripheral wall delimits an outlet for the solid residue derived from pyrolysis of the solid fuel, having a height lower than the space between said peripheral walls.

5. The device according to one of claims 3 or 4, **characterized in that** said device comprises filtering means (40) of the gas derived from coke reduction, configured to filter said gas and to reinject the solid particles such as dust, ash contained in said gas, into the reduction zone (4).

6. The device according to one of claims 3 to 5, **characterized in that** said reduction zone (4) is positioned at least partly underneath said combustion zone (3) and/or underneath said pyrolysis zone (2).

7. The device according to one of claims 3 to 6, **characterized in that** said device comprises a circulation zone (5) for the gas derived from coke reduction, configured to allow said gas to circulate around the pyrolysis zone (2) to transmit at least part of its heat to the pyrolysis zone (2) via conduction with a wall, preferably the outer peripheral wall of said pyrolysis zone (2).

8. The device according to one of claims 3 to 7, **characterized in that** said device comprises means (61) to inject water vapour into the reduction zone (4).

9. The device according to one of claims 3 to 8, **characterized in that** said reduction zone (4) is positioned at least partly between said combustion zone (3) and said pyrolysis zone (2) surrounding the combustion zone (3).

10. The device according to one of claims 1 to 8, **characterized in that** said combustion zone (3) and said pyrolysis zone (2) comprise a common separating wall (320).

11. The device according to the preceding claims, **characterized in that** said combustion means (31, 32, 33) comprise an inlet (31) for an oxidizer, preferably air, and initiating means (32,33) of the reaction between the oxidizer and the pyrolysis gas.

12. The device according to one of the preceding claims, **characterized in that** said device comprises means for drying the solid fuel (6), communicating with the inlet (21) to the pyrolysis zone (2), to dry the solid fuel before it is fed to said pyrolysis zone (2).

13. The device according to one of the preceding claims **characterized in that**, since the device has an outer wall, at least one part of the outer wall of the device comprises thermal insulating means.

14. Method for converting a fuel comprising solid components, called solid fuel, to a gaseous fuel, by means a device conforming to one of the preceding claims, **characterized in that** it comprises the following steps:
(a) pyrolysis of the solid fuel in the pyrolysis zone to decompose said solid fuel to a pyrolysis gas and to a solid pyrolysis residue called coke;
(b) combustion, preferably partial, of said pyrolysis gas in said combustion zone, in the absence of said solid fuel in said combustion zone.

15. The method according to claim 14, **characterized in that** for initiation of said conversion, the combustion zone (3) is preheated preferably by means of a burner (33), and **in that** once said conversion is initiated the preheating is reduced and preferably stopped.

16. The method according to claim 14 or 15, **characterized in that** said method also comprises the following additional step:
(c) reduction of the gas derived from partial combustion of the pyrolysis gas, preferably to enrich said gas with dihydrogen.

17. The method according to claim 16, **characterized in that** said reduction of the gas derived from partial combustion of the pyrolysis gas is performed via reaction between said gas and the coke derived from pyrolysis of the solid fuel.

18. The method according to claim 17 or 16, **characterized in that** the gas derived from reduction circulates around the pyrolysis zone (2) to transmit at least part of its heat to the pyrolysis zone (2).

19. The method according to one of claims 14 to 18, **characterized in that** said solid fuel, preferably after drying, is conveyed into the pyrolysis zone (2) and is absent from the combustion zone (3).
